# EUROPEAN PATENT APPLICATION

(11) **EP 3 998 360 A1**
(43) Date of publication of application: **18.05.2022**
(21) Application number: 20837798.6
(22) Date of filing: 26.06.2020
(51) Int. Cl.: C21D 9/28, C21D 1/10, C21D 1/42, H05B 6/10, H05B 6/44

(54) **MOBILE QUENCHING DEVICE AND MOBILE QUENCHING METHOD**

(30) Priority: 09.07.2019 JP 2019127495
(71) Applicant: NIPPON STEEL CORPORATION, Chiyoda-ku Tokyo 100-8071 (JP)
(72) Inventor: YAMANE Akihito, Tokyo 100-8071 (JP); HATA Toshiyuki, Tokyo 100-8071 (JP); KOZUKA Chihiro, Tokyo 100-8071 (JP)
(74) Representative: Zimmermann & Partner Patentanwälte mbB
(86) International application number: PCT/JP2020/025153
(87) International publication number: WO 2021/006062

(57) **Abstract**

A traverse hardening device comprises a primary coil, secondary coils, a uniaxial actuator, a multiaxial actuator, and a control device. The control device controls the uniaxial actuator and the multiaxial actuator at least in a specific section included between both ends of the small diameter portion in the axial direction so that the plurality of secondary coils and the primary coil move toward one side of the primary coil in the axial direction in a state in which the plurality of secondary coils are annularly formed around an axis of the small diameter portion at a position on the one side thereof in the axial direction and a gap in the axial direction between the plurality of secondary coils and the primary coil is kept constant.

## Description

### [Technical Field]

The present invention relates to a traverse hardening device and a traverse hardening method.

Priority is claimed on Japanese Patent Application No. 2019-127495, filed July 9, 2019, the content of which is incorporated herein by reference.

### [Background Art]

In the related art, the fatigue strength of a shaft-like body is increased by subjecting the shaft-like body to traverse hardening through induction heating. The expression "traverse hardening" mentioned herein means performing hardening while traversing a coil member or the like with respect to a shaft-like body in an axial direction of the shaft-like body.

In induction heating, a shaft-like body is inserted into a primary coil member formed in a solenoidal shape and is heated through the induction heating by causing a high-frequency electric current to flow through the primary coil member. In the induction heating, when a distance between the shaft-like body and the primary coil member decreases, the shaft-like body is heated to a higher temperature. For this reason, when the shaft-like body includes a main body part and a small diameter part provided on the main body part and having an outer diameter smaller than that of the main body part, there is a problem that the small diameter part is likely to be heated less as compared with the main body part.

In order to solve this problem, traverse hardening devices including a secondary coil member having an outer diameter smaller than an inner diameter of the primary coil member inside the primary coil member have been proposed (for example, refer to Patent Documents 1 to 3 which will be described below). The secondary coil member is formed in an O shape or a C shape. In the proposed device using the secondary coil, a distance between the shaft-like body and a coil member close to the shaft-like body does not change much in the main body part and the small diameter part. Thus, the main body part and the small diameter part can be heated equally.

In these traverse hardening devices, a plurality of coil members are disposed concentrically. Thus, a distance between a shaft-like body and a coil member close to the shaft-like body becomes uniform at each position in a circumferential direction. Since a coil member having a large number of turns and a high electric current efficiency can be utilized, it is possible to heat the shaft-like body evenly and efficiently with a small electric current.

### [Citation List]

### [Patent Documents]

[Patent Document 1]
   Japanese Examined Patent Application, Second Publication No. S52-021215
[Patent Document 2]
   Japanese Unexamined Patent Application, First Publication No. 2015-108188
[Patent Document 3]
   Japanese Unexamined Patent Application, First Publication No. 2000-87134

### [Summary of the Invention]

### [Problems to be Solved by the Invention]

However, when a secondary coil formed in an O shape or a C shape is utilized as in the related art described above, it is not possible to freely dispose or remove a secondary coil into or outside of a gap between a primary coil and a shaft-like body (particularly, at small diameter part) while the primary coil is traversing relative to the shaft-like body (that is, during traverse hardening). In order to realize this, it is necessary to introduce a complicated mechanism into a traverse hardening device. Thus, this leads to an increase in development costs and the like.

For this reason, in the related art, there has been a demand for the development of a traverse hardening device in which a secondary coil is used for heating a shaft-like body with a relatively simple constitution.

The present invention was made in view of the above circumstances, and an object of the present invention is to provide a traverse hardening device in which a secondary coil is used for heating a shaft-like body with a relatively simple constitution and a traverse hardening method which can be realized using the traverse hardening device.

### [Means for Solving the Problem]

The present invention employs the following measures to solve the above-described problems and achieve the object.

(1) A traverse hardening device according to an aspect of the present invention is a traverse hardening device for performing traverse hardening on a shaft-like body which includes a main body part and a small diameter portion provided in an intermediate section of the main body part in an axial direction and having an outer diameter smaller than that of the main body part, the traverse hardening device including: a primary coil having an inner diameter larger than the outer diameter of the main body part and having a solenoidal shape; a plurality of secondary coils having an inner diameter larger than the outer diameter of the small diameter portion and having an arc shape; a uniaxial actuator configured to enable positioning of the primary coil in the axial direction in a state of supporting the primary coil so that the shaft-like body passes inside the primary coil in a radial direction thereof; a multiaxial actuator configured to individually enable positioning of the secondary coils in a rectangular coordinate system which includes the axial direction and a radial direction of the shaft-like body in a state of individually supporting the secondary coils so that central axes of the secondary coils are parallel to the axial direction; and a control device which controls the uniaxial actuator and the multiaxial actuator.

In the traverse hardening device, the control device controls the uniaxial actuator and the multiaxial actuator at least in a specific section included between both ends of the small diameter portion in the axial direction so that the plurality of secondary coils and the primary coil move toward one side of the primary coil in the axial direction in a state in which the plurality of secondary coils are annularly formed around an axis of the small diameter portion at a position on the one side thereof in the axial direction and a gap in the axial direction between the plurality of secondary coils and the primary coil is kept constant.

(2) In the traverse hardening device set forth in the above (1), the control device may control the multiaxial actuator so that each of the plurality of secondary coils annularly formed retracts to an outside of the main body part in a radial direction thereof when the plurality of secondary coils reach an end of the specific section on the one side, and then control the uniaxial actuator and the multiaxial actuator so that the plurality of secondary coils and the primary coil move to a movement stop position set at a position away from the specific section to the one side in the axial direction in a state in which the gap between the plurality of secondary coils and the primary coil in the axial direction is kept constant.

(3) In the traverse hardening device set forth in the above (1) or (2), the control device may control, as an initial setting process, the uniaxial actuator so that the primary coil is made to stand by at a movement start position set at a position away from the specific section to the other side in the axial direction and controls the multiaxial actuator so that the plurality of secondary coils are annularly formed in the specific section and are made to stand by at an end of the specific section on the other side, and then control the uniaxial actuator so that the primary coil moves from the movement start position toward the specific section.

(4) In the traverse hardening device set forth in any one of the above (1) to (3), the traverse hardening device may further include: a cooling ring having an inner diameter larger than the outer diameter of the main body part and having an inner circumferential surface in which a plurality of nozzles are provided; a cooling liquid supply device which supplies a cooling liquid to the cooling ring; and a current supply device which supplies a high-frequency electric current to the primary coil.

In this case, the uniaxial actuator may be configured to enable positioning of the primary coil in the axial direction in a state of supporting the primary coil and the cooling ring so that the shaft-like body passes inside the primary coil and the cooling ring in the radial direction thereof and the primary coil is disposed on the one side in the axial direction with respect to the cooling ring.

In addition, the control device may synchronously control the uniaxial actuator, the cooling liquid supply device, and the current supply device so that the high-frequency electric current is supplied to the primary coil and the cooling liquid is supplied to the cooling ring during movement of the primary coil and the cooling ring.

(5) A traverse hardening method according to an aspect of the present invention is a traverse hardening method for performing traverse hardening on a shaft-like body which includes a main body part and a small diameter portion provided in an intermediate section of the main body part in an axial direction thereof and having an outer diameter smaller than that of the main body part, the traverse hardening method including: a first step of providing a primary coil having an inner diameter larger than an outer diameter of the main body part and having a solenoidal shape and a plurality of secondary coils having an inner diameter larger than the outer diameter of the small diameter portion and having an arc shape; and a second step of moving the primary coil toward one side in the axial direction so that the shaft-like body passes inside the primary coil in a radial direction thereof while supplying a high-frequency electric current to the primary coil.

The second step includes, at least in a specific section in the axial direction included between both ends of the small diameter portion, annularly forming the plurality of secondary coils around an axis of the small diameter portion at a position on one side in the axial direction with respect to the primary coil and moving the plurality of secondary coils and the primary coil toward the one side in the axial direction in a state in which a gap in the axial direction between the plurality of secondary coils and the primary coil is kept constant.

(6) In the traverse hardening method set forth in the above (5), the second step may include retracting each of the plurality of secondary coils annularly formed to an outside of the main body part in a radial direction thereof when the plurality of secondary coils reach an end of the specific section on the one side, and then moving the plurality of secondary coils and the primary coil to a movement stop position set at a position away from the specific section to the one side in the axial direction in a state in which the gap between the plurality of secondary coils and the primary coil in the axial direction is kept constant.

(7) In the traverse hardening method set forth in the above (5) or (6), the second step may include, as an initial setting process, making the primary coil stand by at a movement start position set at a position away from the specific section to the other side in the axial direction, annularly forming the plurality of secondary coils in the specific section, and making the plurality of secondary coils stand by at an end of the specific section on the other side, and then moving the primary coil from the movement start position toward the specific section.

(8) In the traverse hardening method set forth in any one of the above (5) to (7), the first step may include providing a cooling ring having an inner diameter larger than the outer diameter of the main body part and having an inner circumferential surface in which a plurality of nozzles are provided, in addition to the primary coil and the secondary coils, and the second step may include moving the primary coil and the cooling ring toward the one side in the axial direction so that the shaft-like body passes inside the primary coil and the cooling ring in the radial direction thereof while supplying the high-frequency electric current to the primary coil and supplying the cooling liquid to the cooling ring in a state in which the primary coil is disposed on the one side in the axial direction with respect to the cooling ring.

### [Effects of the Invention]

According to each of the above aspects of the present invention, it is possible to provide a traverse hardening device in which a secondary coil can be used for heating a shaft-like body and a traverse hardening method which can be realized using the traverse hardening device at the time of heating the shaft-like body which has a main body part, and a small diameter portion provided in an intermediate section of the main body part in an axial direction and having an outer diameter smaller than that of the main body part with a relatively simple constitution.

### [Brief Description of Drawings]

FIG. 1 is a schematic perspective view of a pair of arc-shaped secondary coils utilized as secondary coils in an embodiment of the present invention.
FIG. 2 is a schematic side view of a traverse hardening device having a partial cutout portion according to the embodiment.
FIG. 3 is a cross-sectional view taken along line IV-IV in FIG. 2.
FIG. 4 is a first explanatory view associated with a traverse hardening method according to the embodiment.
FIG. 5 is a second explanatory view associated with the traverse hardening method according to the embodiment.
FIG. 6 is a third explanatory view associated with the traverse hardening method according to the embodiment.
FIG. 7 is a fourth explanatory view associated with the traverse hardening method according to the embodiment.
FIG. 8 is a fifth explanatory view associated with the traverse hardening method according to the embodiment.
FIG. 9 is a sixth explanatory view associated with the traverse hardening method according to the embodiment.
FIG. 10 is a diagram showing the results of simulation analysis of a surface temperature distribution of a shaft-like body when the shaft-like body is subjected to induction heating using only a primary coil without using a secondary coil (in the case of a comparative example).
FIG. 11 is a diagram showing the results of simulation analysis of a surface temperature distribution of a shaft-like body when the shaft-like body is subjected to induction heating using arc-shaped secondary coils and a primary coil (in the case of an example of the present invention).

### [Embodiments for implementing the Invention]

The inventors of the present invention has diligently studied a method for subjecting a shaft-like body having various outer diameters and steps to traverse hardening on the basis of a method of utilizing a secondary coil having good heating efficiency.

The advantage of the secondary coil is that the eddy current occurring in the secondary coil wraps around from an outer circumferential surface to an inner circumferential surface of the secondary coil without closing in a circumferential direction due to the presence of a defective portion in the circumferential direction and a surface of the shaft-like body can be subjected to induction heating due to the eddy current which wraps around the inner circumferential surface thereof. On the other hand, when a secondary coil formed in an O shape or a C shape as in the related art is utilized, the secondary coil cannot be freely disposed or removed into or outside of a gap between the primary coil and the shaft-like body while the primary coil is moving relative to the shaft-like body (that is, during traverse hardening).

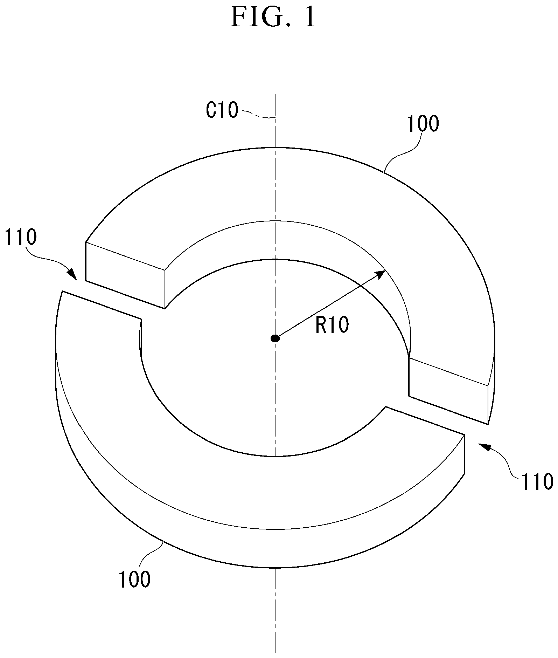

Thus, as shown in FIG. 1, the inventors of the present invention have prepared a plurality of secondary coils 100 which have an inner diameter R10 larger than an outer diameter of a small diameter portion of a shaft-like body and have an arc shape, and have devised a method for disposing the secondary coils 100 around an axis of the small diameter portion when the small diameter portion of the shaft-like body is subjected to induction heating. According to this method, when the plurality of secondary coils 100 are regarded as an integral ring coil, a plurality of defective portions 110 are formed in the circumferential direction thereof. Thus, during traverse hardening while maintaining a function of being capable of subjecting a surface of the shaft-like body to induction heating using the eddy current which has wrapped around an inner circumferential surface of each of the secondary coils 100, it is possible to freely dispose or remove the secondary coils 100 into or outside of the gap between the primary coil and the shaft-like body (small diameter portion).

Since FIG. 1 shows, as an example, a case in which two (a pair of) secondary coils 100 are utilized, and two defective portions 110 are also formed. However, of course, the number of secondary coils 100 is not limited to two and three or four secondary coils 100 may be provided in a necessary number. In FIG. 1, a central axis of each of the secondary coils 100 is denoted by reference numeral C10.

As described above, when the arc-shaped secondary coil 100 are utilized, it is theoretically possible to freely dispose or remove the secondary coil 100 into or outside of the gap between the primary coil and the shaft-like body (small diameter portion). Here, in order to realize this, it is necessary to introduce a very complicated mechanical mechanism into the traverse hardening device and the development costs and the running costs are enormous.

Therefore, the inventors of the present invention have diligently studied the traverse hardening device in which the secondary coils can be utilized for heating the shaft-like body with a relatively simple constitution. As a result, it was found that in a state in which the arc-shaped secondary coil is disposed at a position close to the primary coil on a traveling direction side and the gap between the primary coil and the arc-shaped secondary coil in the axial direction of the shaft-like body is kept constant, it is possible to realize the traverse hardening device in which the secondary coils can be utilized for heating the shaft-like body with a relatively simple constitution by adopting a method for moving both coils toward the traveling direction side.

The present invention has been completed on the basis of the above findings, and an embodiment of the present invention will be described in detail below with reference to the drawings.

### [Traverse hardening device]

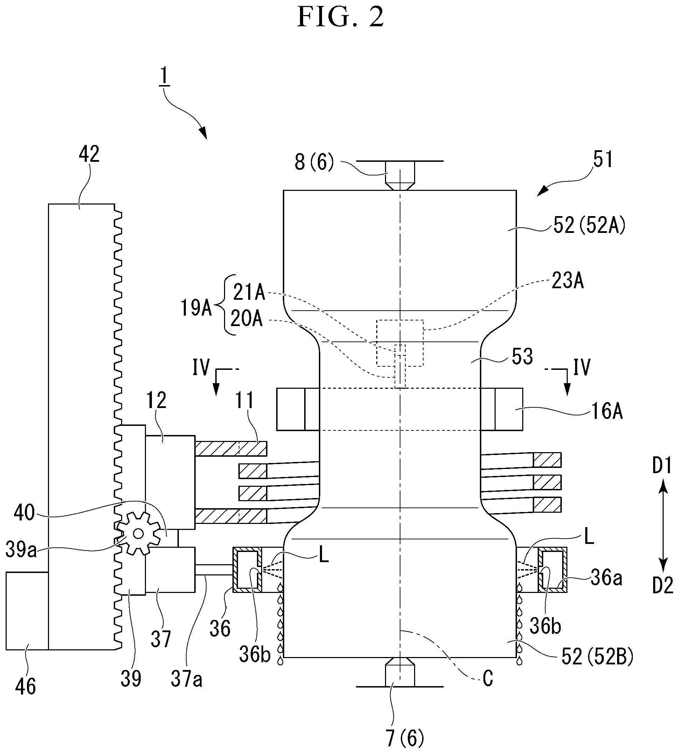

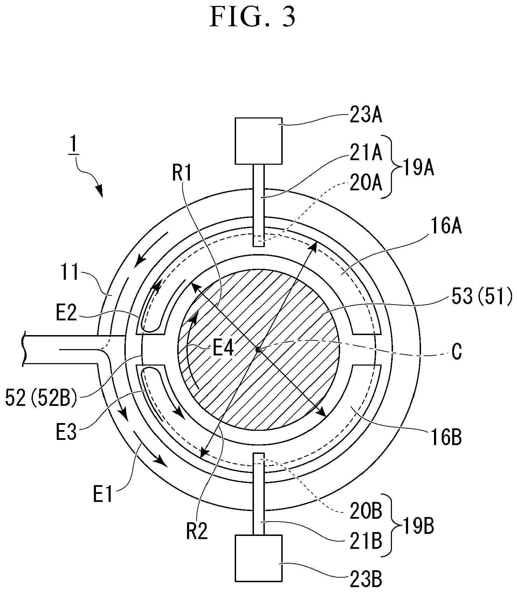

A traverse hardening device 1 according to an embodiment of the present invention will be described with reference to FIGS. 2 and 3. FIG. 2 is a schematic side view of the traverse hardening device 1 having a partial cutout portion according to the embodiment. FIG. 3 is a cross-sectional view taken along line IV-IV in FIG. 2. As shown in FIGS. 2 and 3, the traverse hardening device 1 is a device for subjecting the shaft-like body 51 such as an axle for a railroad vehicle to traverse hardening using a high-frequency electric current.

First, the shaft-like body 51 will be described. The shaft-like body 51 includes a main body part 52 and a small diameter portion 53 provided in an intermediate section of the main body part 52 in an axis C direction. The main body part 52 and the small diameter portion 53 are each formed in a columnar shape and an axis of the small diameter portion 53 coincides with an axis C of the main body part 52.

In the following description, a portion of the main body part 52 disposed on one side D1 in the axis C direction with respect to the small diameter portion 53 is referred to as a "first main body part 52A". A portion thereof disposed on the other side D2 in the axial C direction with respect to the small diameter portion 53 is referred to as a "second main body part 52B".

The first main body part 52A, the small diameter portion 53, and the second main body part 52B each have a columnar shape and are disposed on a common axis C. An outer diameter of the small diameter portion 53 is smaller than outer diameters of the first main body part 52A and the second main body part 52B.

The shaft-like body 51 is formed of a conductive material such as carbon steel or low alloy steel containing 95% by weight or more of iron (Fe) which is ferrite.

The traverse hardening device 1 includes a support member 6, a primary coil 11, a current transformer 12 (current supply device), a pair of (two) secondary coils 16A and 16B, a multiaxial actuator (19A, 19B, 23A. 23B), a cooling ring 36, a pump 37 (cooling liquid supply device), a uniaxial actuator (39, 40, 42), and a control device 46.

As shown in FIG. 2, the support member 6 includes a lower center 7 and an upper center 8. The lower center 7 supports the second main body part 52B of the shaft-like body 51 from below the second main body part 52B. The upper center 8 supports the first main body part 52A of the shaft-like body 51 from above the first main body part 52A. The upper center 7 and the lower center 8 support the shaft-like body 51 so that the axis C is directed in an upward/downward direction, the one side D1 in the axis C direction is directed upward, and the other side D2 in the axis C direction is directed downward.

The primary coil 11 is a coil having a solenoidal shape and is formed of a strand of a coil wound in a spiral shape. An inner diameter of the primary coil 11 is larger than the outer diameters of the first main body part 52A and the second main body part 52B. The shaft-like body 51 is inserted into the primary coil 11 in a radial direction thereof. Each end portion of the primary coil 11 is electrically and mechanically joined to the current transformer 12. The current transformer 12 is a current supply device which supplies a high-frequency electric current to the primary coil 11 under the control of the control device 46.

As shown in FIG. 3, the secondary coils 16A and 16B have an arc shape in a plan view viewed in the axis C direction. The secondary coils 16A and 16B are disposed side by side to be separated from each other in a circumferential direction of the shaft-like body 51 (hereinafter simply referred to as a "circumferential direction"). This circumferential direction coincides with a circumferential direction or the like of the primary coil 11. In the embodiment, as shown in FIG. 2, it is assumed that a length of the secondary coils 16A and 16B in the axis C direction is significantly shorter than a length of the small diameter portion 53 of the shaft-like body 51 in the axis C direction.

Although a case in which the two (pair of) secondary coils 16A and 16B are utilized is illustrated in the embodiment, of course, the number of arc-shaped secondary coils is not limited to two and three, four, or the required number may be prepared.

As shown in FIG. 3, a diameter R1 (that is, an inner diameter R1 of the secondary coils 16A and 16B) of an inscribed circle in contact with outer surfaces which faces the axis C of the secondary coils 16A and 16B is larger than the outer diameter of the small diameter portion 53 of the shaft-like body 51. It is desirable that the inner diameter R1 of the secondary coils 16A and 16B be smaller than the outer diameters of the first main body part 52A and the second main body part 52B. In FIG. 3, although a diameter R2 of a circumscribed circle in contact with the outer surfaces opposite to the axis C of the secondary coils 16A and 16B (that is, an outer diameter R2 of the secondary coils 16A and 16B) is shown to be smaller than the inner diameter of the primary coil 11, the outer diameter R2 of the secondary coils 16A and 16B is not limited thereto and may be larger than the inner diameter of the primary coil 11.

As shown in FIGS. 2 and 3, first support portions 19A and 19B are fixed to the secondary coils 16A and 16B.

The first support portion 19A includes a first support piece 20A extending from the secondary coil 16A toward the one side D1 in the axis C direction and a first joint piece 21A extending from the first support piece 20A toward an outer side of the shaft-like body 51 in a radial direction thereof. The first support piece 20A is disposed at a center portion of the secondary coil 16A in the circumferential direction. It is desirable to attach the first support piece 20A at a position which is an outer end portion of the secondary coil 16A in the radial direction thereof and is further outward in the radial direction than the first main body part 52A and the second main body part 52B and to prevent interference between the first support piece 20A and the first main body part 52A and the second main body part 52B. The first joint piece 21A extends outward in the radial direction from an end portion opposite to an end portion of the first support piece 20A to which the secondary coil 16A is fixed.

As in the first support portion 19A, the first support portion 19B includes a first support piece 20B and a first joint piece 21B. The first joint pieces 21A and 21B are disposed on the same straight line. The first support portions 19A and 19B are formed by bending, for example, a rod-shaped member having electrical insulation.

As shown in FIGS. 2 and 3, first moving portions 23A and 23B are connected to the first joint piece 21A and 21B. The first moving portions 23A and 23B include, for example, a three-axis stage and a drive motor and can move the secondary coils 16A and 16B via the first support portions 19A and 19B in the upward/downward direction (the axis C direction) and in a direction along a horizontal plane (a plane orthogonal to the axis C).

The first support portions 19A and 19B and the first moving portions 23A and 23B which have been described above are mechanical elements constituting the multiaxial actuator of the present invention. That is to say, the multiaxial actuator composed of these mechanical elements is configured to enable individual positioning of the secondary coils 16A and 16B in a rectangular coordinate system which includes the axis C direction and the radial direction of the shaft-like body 51 in a state of individually supporting the secondary coils 16A and 16B such that the central axes of the secondary coils 16A and 16B are parallel to the axis C direction.

As shown in FIG. 2, the cooling ring 36 is an annular member having an inner diameter larger than the outer diameter of the main body part 52. An internal space 36a is formed in the cooling ring 36. A plurality of nozzles 36b communicating with the internal space 36a are formed in an inner circumferential surface of the cooling ring 36 to be away from each other in the circumferential direction. The shaft-like body 51 is inserted into the cooling ring 36 in the radial direction thereof. The cooling ring 36 is disposed closer to the other side D2 in the axis C direction than the primary coil 11.

The pump 37 is joined to the cooling ring 36 via a water supply pipe 37a. The pump 37 is a cooling liquid supply device which supplies a cooling liquid L such as water into the internal space 36a of the cooling ring 36 via the water supply pipe 37a under the control of the control device 46. The cooling liquid L supplied into the internal space 36a of the cooling ring 36 is ejected toward an outer circumferential surface of the shaft-like body 51 through the plurality of nozzles 36b to cool the shaft-like body 51.

As shown in FIG. 2, the primary coil 11, the current transformer 12, the cooling ring 36, and the pump 37 are fixed to a support plate 39. Pinions 39a are formed on the support plate 39. A motor 40 configured to drive the pinions 39a is attached to the support plate 39.

The pinions 39a of the support plate 39 meshes with a rack 42. If the motor 40 is driven, the pinions 39a rotates forward or backward. Thus, the support plate 39 moves upward or downward (that is, in the axis C direction) with respect to the rack 42.

The rack 42 may be a ball screw. In this case, the plurality of pinions 39a may be disposed to have the ball screw disposed therebetween.

The support plate 39 having the pinions 39a described above, the motor 40, and the rack 42 are mechanical elements constituting the uniaxial actuators of the present invention. That is to say, each of the uniaxial actuators composed of these mechanical elements is configured to enable positioning of the primary coil 11 in the axis C direction in a state of supporting the primary coil 11 and the cooling ring 36 so that the shaft-like body 51 passes inside the primary coil 11 and the cooling ring 36 in the radial direction thereof and the primary coil 11 is disposed on the one side D1 in the axis C direction with respect to the cooling ring 36.

The control device 46 includes an arithmetic circuit (not shown) and a memory (not shown). The memory has a control program or the like for driving the arithmetic circuit stored therein.

The control device 46 is connected to the current transformer 12, the first moving portions 23A and 23B (mechanical elements of the multiaxial actuator), the pump 37, and the motor 40 (the mechanical element of the uniaxial actuator) and synchronously controls these operations in accordance with the control program.

### [Traverse hardening method]

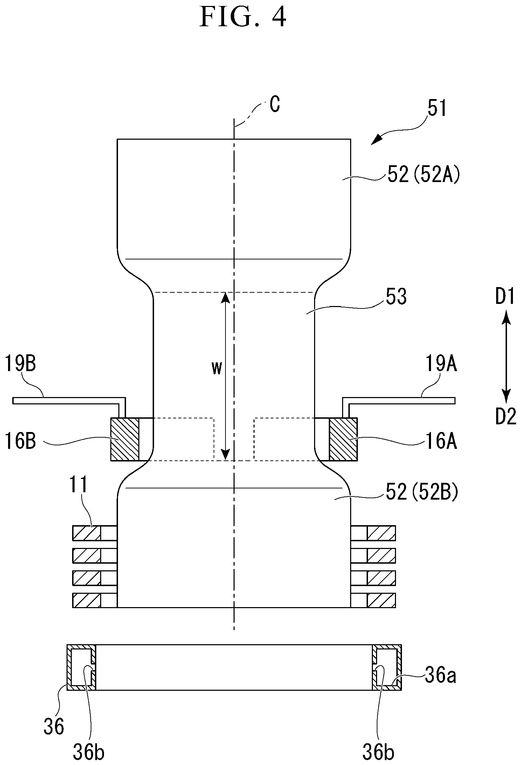

A traverse hardening method realized using the traverse hardening device 1 configured as described above will be described below with reference to FIGS. 4 to 9. The traverse hardening method according to the embodiment has, as a basic process, a preparatory process (first step) and a hardening process (second step).

In the preparatory process, the shaft-like body 51 which is a body to be heated and the traverse hardening device 1 including the above constitution are prepared, the upper center 8 supports an end surface of the first main body part 52A on an upper side (the one side D1 in the axis C direction) so that the axis C of the shaft-like body 51 is perpendicular to a horizontal plane and the lower center 7 supports an end surface of the second main body part 52B on a lower side (the other side D2 in the axis C direction) (refer to FIG. 2). In this case, the one side D1 (upper side) in the axis C direction is a direction in which the primary coil 11 and the cooling ring 36 moves forward.

In the hardening process, first, the control device 46 of the traverse hardening device 1 performs, as an initial setting process, a process for moving the primary coil 11 and the secondary coils 16A and 16B to an initial position (traverse start position) set in advance and making the primary coil 11 and the secondary coils 16A and 16B stand by.

To be specific, as shown in FIG. 4, the control device 46 controls, as an initial setting process, the first moving portions 23A and 23B so that the two secondary coils 16A and 16B are annularly formed (refer to FIGS. 1 and 3) around the axis of the small diameter portion 53 in a specific section W in the axis C direction included between both ends of the small diameter portion 53 and the plurality of secondary coils 16A and 16B stand by at an initial position set at the lower end in the specific section W.

As described above, multiaxial actuator which includes the first support portions 19A and 19B and the first moving portions 23A and 23B are configured to enable individual positioning of the secondary coils 16A and 16B in the rectangular coordinate system which includes the axis C direction and the radial direction of the shaft-like body 51 in a state of individually supporting the secondary coils 16A and 16B so that the central axes of the secondary coils 16A and 16B are parallel to the axis C direction. For this reason, when the multiaxial actuator composed of these mechanical elements is controlled, as described above, it is possible to easily annularly form the plurality of secondary coils 16A and 16B and it is possible to move the plurality of secondary coils 16A and 16B to the initial position and make the plurality of secondary coils 16A and 16B stand by.

Also, as shown in FIG. 4, the control device 46 controls, as an initial setting process, the motor 40 of the uniaxial actuator so that the primary coil 11 is made stand by at a movement start position set at a position away from the specific section W to the other side D2 in the axis C direction. As shown in FIG. 4, the movement start position of the primary coil 11 may be set to a position corresponding to the lower end portion of the second main body part 52B or may be set to a position which is further away by a distance shorter than a coil width of the primary coil 11 in a direction orthogonal to the radial direction thereof from the lower end portion of the second main body part 52B to the other side D2 in the axis C direction. In other words, the movement start position may be set to a position in which the entire second main body part 52B can be subjected to induction heating through movement (upward movement) of the primary coil 11.

As described above, the uniaxial actuator including the support plate 39, the motor 40, and the rack 42 is configured to enable positioning of the primary coil 11 in the axis C direction while supporting the primary coil 11 and the cooling ring 36 so that the shaft-like body 51 passes inside the primary coil 11 and the cooling ring 36 in the radial direction thereof and the primary coil 11 is disposed on the one side D1 (upper side) in the axis C direction with respect to the cooling ring 36. For this reason, when the multiaxial actuator composed of these mechanical elements is controlled, it is possible to move the primary coil 11 to the movement start position and make the primary coil 11 stand by in a state in which the primary coil 11 is disposed on the upper side (forward movement direction side) with respect to the cooling ring 36.

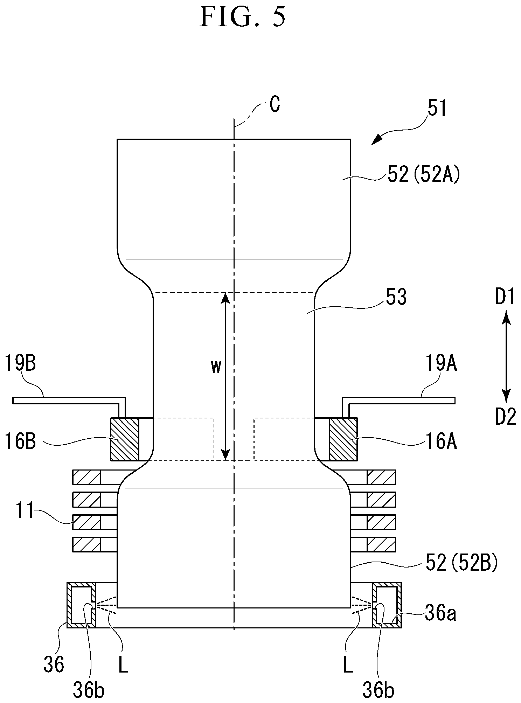

Subsequently, after the completion of the initial setting process as described above, as shown in FIG. 5, the control device 46 controls the motor 40 of the uniaxial actuator so that the primary coil 11 moves (moves upward) from the movement start position toward the specific section W. At this time, the cooling ring 36 also moves upward together with the primary coil 11 while a state in which the primary coil 11 is disposed on the upper side (forward movement direction side) with respect to the cooling ring 36 is being maintained. The control device 46 synchronously controls the current transformer 12, the pump 37, and the motor 40 of the uniaxial actuator so that a high-frequency electric current is supplied to the primary coil 11 and the cooling liquid L is supplied to the cooling ring 36 while the primary coil 11 and the cooling ring 36 are moving in a forward movement direction side.

In this way, the current transformer 12, the pump 37, and the motor 40 of the uniaxial actuator are synchronously controlled. Thus, it is possible to move upward the primary coil 11 and the cooling ring 36 in the forward movement direction side so that the shaft-like body 51 (second main body part 52B) passes inside the primary coil 11 and the cooling ring 36 in the radial direction thereof while a high-frequency electric current is being supplied to the primary coil 11 and the cooling liquid L is being supplied to the cooling ring 36 in a state in which the primary coil 11 is disposed on the forward movement direction side with respect to the cooling ring 36.

When the primary coil 11 moves upward in the axis C direction while receiving the supply of a high-frequency electric current, the second main body part 52B is subjected to continuous induction heating in the axis C direction and a metal structure of a surface of the second main body part 52B transforms into austenite. At this time, since the cooling ring 36 also moves upward in the form in which the cooling ring 36 follows the primary coil 11, immediately after the second main body part 52B is subjected to induction heating, the second main body part 52B is continuously cooled in the axis C direction through the injection of the cooling liquid L from the cooling ring 36. As a result, the metal structure of the surface of the second main body part 52B transforms from the austenite into hard martensite. In this way, as the primary coil 11 and the cooling ring 36 move upward, the second main body part 52B is seamlessly hardened.

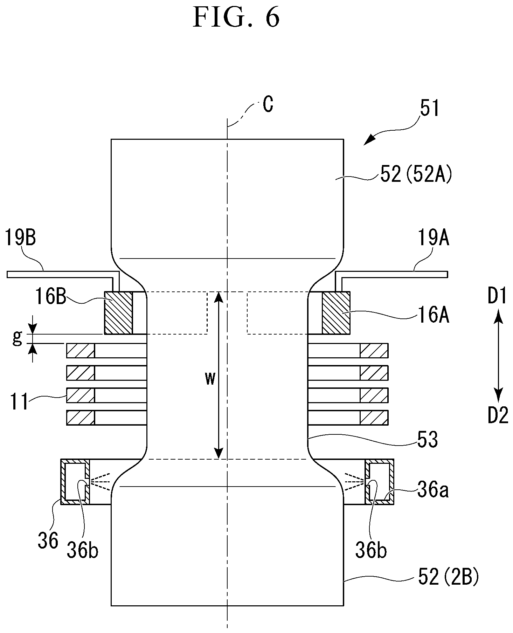

Subsequently, after the primary coil 11 reaches a position close to the specific section W (that is, a position close to the plurality of secondary coils 16A and 16B), as shown in FIG. 6, the control device 46 synchronously controls the first moving portions 23A and 23B of the multiaxial actuator and the motor 40 of the uniaxial actuator so that the plurality of secondary coils 16A and 16B and the primary coil 11 moves (moves upward) toward the one side D1 (the traveling direction side) in the axis C direction in a state in which the plurality of secondary coils 16A and 16B are formed positions on the traveling direction side with respect to the primary coil 11 and a gap g between the plurality of secondary coils 16A and 16B in the axis C direction and the primary coil 11 is kept constant.

The control device 46 synchronously controls the current transformer 12 and the pump 37 together with the uniaxial actuator and the multiaxial actuator so that a high-frequency electric current is continuously supplied to the primary coil 11 and the cooling liquid L is continuously supplied to the cooling ring 36.

When each device is synchronously controlled in this way, it is possible to move upward the plurality of secondary coils 16A and 16B, the primary coil 11, and the cooling ring 36 toward the traveling direction side so that the shaft-like body 51 (small diameter portion 53) passes inside the plurality of secondary coils 16A and 16B, the primary coil 11, and the cooling ring 36 in the radial direction thereof while a high-frequency electric current is supplied to the primary coil 11 and supplying the cooling liquid L to the cooling ring 36 in a state in which the plurality of secondary coils 16A and 16B, the primary coil 11, and the cooling ring 36 are disposed with respect to the shaft-like body 51 in this order and the gap g between the plurality of secondary coils 16A and 16B and the primary coil 11 is kept constant when viewed from the traveling direction side.

As described above, when both coils move in the specific section W toward the traveling direction side in a state in which the gap g between the plurality of secondary coils 16A and 16B and the primary coil 11 is kept constant, the small diameter portion 53 is directly subjected to induction heating using the primary coil 11 and is also subjected to induction heating using the plurality of secondary coils 16A and 16B. To be specific, as shown in FIG. 3, if an electric current flows in a direction E1 of the primary coil 11, eddy currents in directions E2 and E3 flow on outer surfaces of the secondary coils 16A and 16B through electromagnetic induction and an eddy current in a direction E4 also flows on an outer surface of the small diameter portion 53. As a result, the small diameter portion 53 is continuously subjected to induction heating in the axis C direction using the primary coil 11 and the plurality of secondary coils 16A and 16B.

It is preferable that a size (length) of the gap g between the plurality of secondary coils 16A and 16B and the primary coil 11 be provided as small as possible to effectively generate eddy currents in the plurality of secondary coils 16A and 16B through electromagnetic induction using the primary coil 11. In other words, it is preferable that the plurality of secondary coils 16A and 16B and the primary coil 11 be disposed as close as possible to each other.

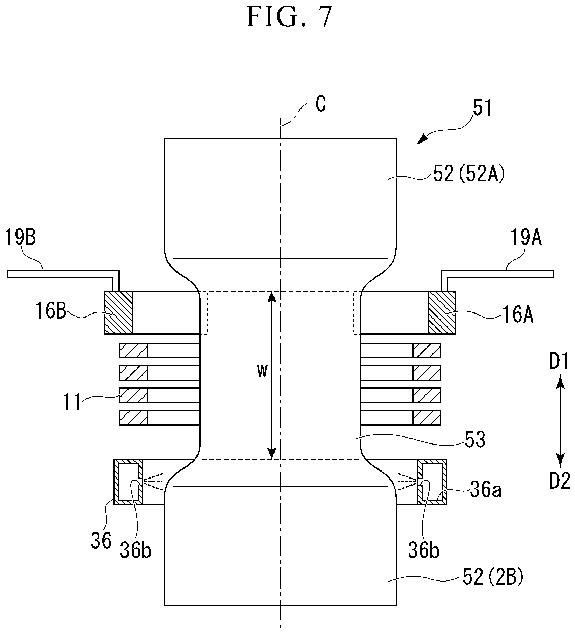

Subsequently, as shown in FIG. 7, the control device 46 controls the first moving portions 23A and 23B of the multiaxial actuator so that each of the secondary coils 16A and 16B annularly formed retracts to the outside of the main body part 52 in the radial direction thereof when the plurality of secondary coils 16A and 16B reach an upper end of the specific section W.

In this way, when the plurality of secondary coils 16A and 16B reach the upper end of the specific section W, by retracting each of the secondary coils 16A and 16B annularly formed to the outside of the main body part 52 in the radial direction thereof, it is possible to prevent the secondary coils 16A and 16B from colliding with the main body part 52 (first main body part 52A) when the secondary coils 16A and 16B is moved upward closer to the one side D1 (upper side) in the axis C direction than the specific section W.

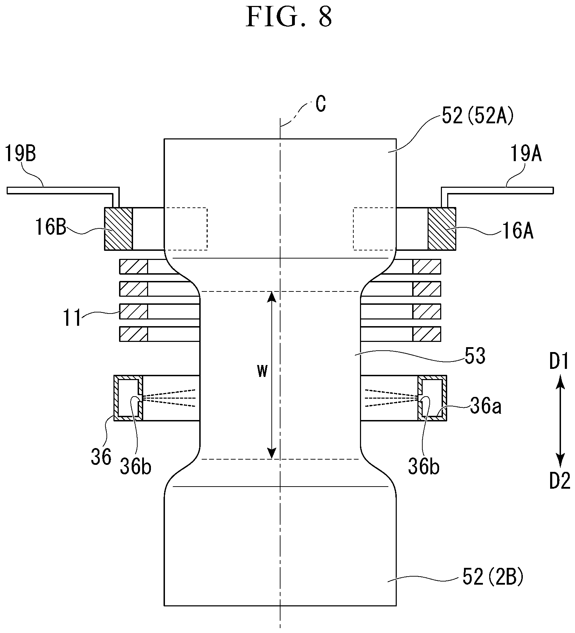

After retracting each of the secondary coils 16A and 16B to the outside of the main body part 52 in the radial direction thereof, as shown in FIG. 8, the control device 46 synchronously controls the first moving portions 23A and 23B of the multiaxial actuator and the motor 40 of the uniaxial actuator so that the secondary coils 16A and 16B and the primary coil 11 move upward toward the traveling direction side in a state in which the gap g between the secondary coils 16A and 16B and the primary coil 11 is kept constant.

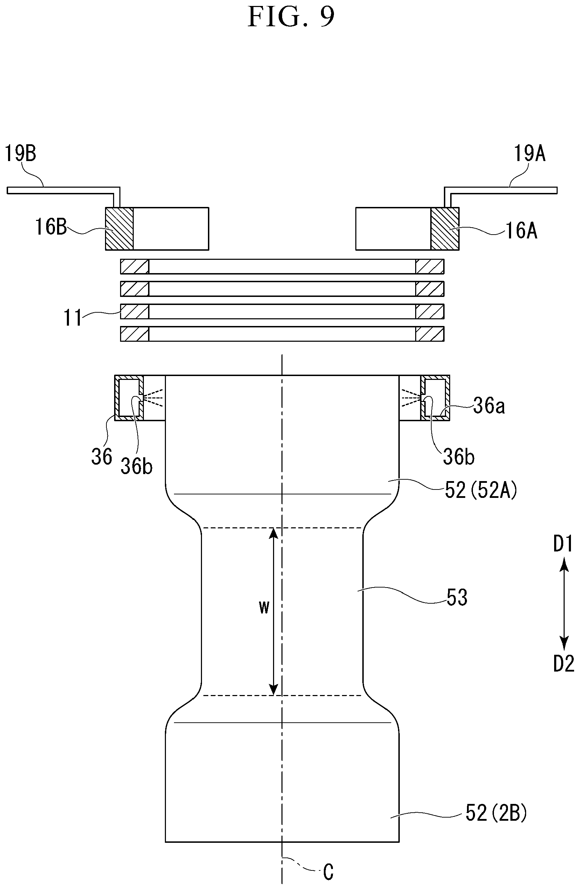

Also, as shown in FIG. 9, finally, the control device 46 synchronously controls the first moving portions 23A and 23B of the multiaxial actuator and the motor 40 of the uniaxial actuator so that the secondary coils 16A and 16B and the primary coil 11 move to a movement stop position set at a position away from the specific section W to the one side D1 in the axis C direction.

The control device 46 synchronously controls the current transformer 12 and the pump 37 together with the uniaxial actuator and the multiaxial actuator so that, when the primary coil 11 moves beyond an upper end of the first main body part 52A, the supply of a high-frequency electric current stops and the cooling liquid L is continuously supplied to the cooling ring 36 until the primary coil 11 moves from the specific section W to the movement stop position.

When the devices are synchronously controlled in this way, it is possible to move upward the secondary coils 16A and 16B, the primary coil 11, and the cooling ring 36 from the specific section W to the movement stop position so that a high-frequency electric current is supplied to the primary coil 11 in a state in which the gap g between the secondary coils 16A and 16B and the primary coil 11 is kept constant and the shaft-like body 51 (first main body part 52A) passes inside the secondary coils 16A and 16B, the primary coil 11, and the cooling ring 36 in the radial direction thereof while the cooling liquid L is supplied to the cooling ring 36.

As shown in FIG. 9, the movement stop position is set at a position further away from an upper portion of the first main body part 52A to the one side D1 in the axis C direction. In other words, setting the movement stop position at a position in which the entire first main body part 52A can be subjected to induction heating and cooling by moving (moving upward) the primary coil 11 and the cooling ring 36 is required.

As shown in FIG. 9, in the process in which the secondary coils 16A and 16B and the primary coil 11 move upward to the movement stop position, the small diameter portion 53 and the first main body part 52A are continuously subjected to induction heating in the axis C direction and the metal structure of the surfaces of the small diameter portion 53 and the first main body part 52A transforms into austenite. At this time, since the cooling ring 36 also moves upward in the form in which the cooling ring 36 follows the primary coil 11, immediately after the small diameter portion 53 and the first main body part 52A are subjected to induction heating, the small diameter portion 53 and the first main body part 52A are continuously cooled in the axis C direction through the injection of the cooling liquid L from the cooling ring 36. As a result, the metal structure of the surfaces of the small diameter portion 53 and the first main body part 52A transforms from the austenite into hard martensite.

Through the above process, when the secondary coils 16A and 16B and the primary coil 11 reach the movement stop position, the entire shaft-like body 51 has been hardened.

As described above, according to the embodiment, when a method in which both coils are caused to move toward the traveling direction side in a state in which the secondary coils 16A and 16B are disposed at positions close to the primary coil 11 on the traveling direction side and the gap g between the primary coil 11 and the secondary coils 16A and 16B (coils annularly formed) in the axis C direction is kept constant is adopted, without adopting a constitution in which the secondary coils 16A and 16B are disposed or removed into or outside of the gap between the primary coil 11 and the shaft-like body 51 (small diameter portion 53), it is possible to provide the traverse hardening device 1 in which the secondary coils 16A and 16B can be utilized for heating the shaft-like body 51 with a relatively simple constitution and the traverse hardening method which can be realized using the traverse hardening device 1.

Although the embodiment of the present invention has been described above, the present invention is not limited to the embodiment described above and various modifications can be provided without departing from the gist of the present invention.

For example, in the embodiment, the shaft-like body 51 may not be disposed so that the axis C is disposed in the upward/downward direction (vertical direction) and the axis C may be disposed to be inclined with respect to the upward/downward direction. In this case, the primary coil 11 and the cooling ring 36 traverse to be inclined in the upward/downward direction.

Although the shaft-like body 51 is assumed to be an axle for a railroad vehicle, the shaft-like body 51 may be another shaft-like body such as a ball screw.

### [Analysis result]

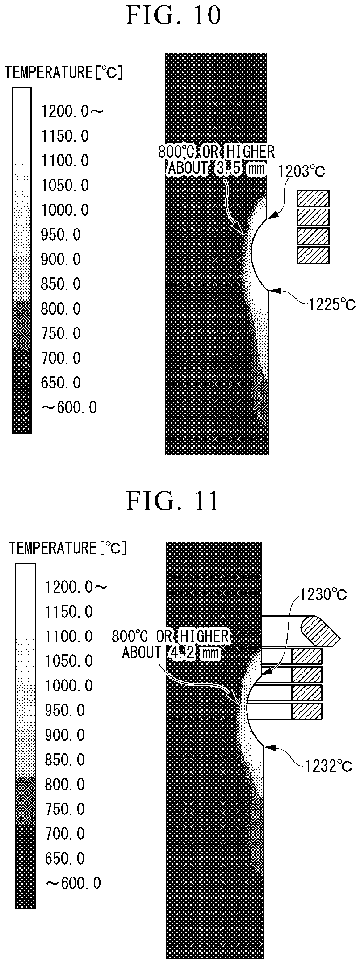

FIG. 10 shows the results of simulation analysis of a surface temperature distribution of the shaft-like body 51 when the shaft-like body 51 is subjected to induction heating using only the primary coil 11 without utilizing the secondary coils 16A and 16B. FIG. 10 shows only the analysis results of the right half of a vertical cross-sectional view of the shaft-like body 51.

In this simulation, the outer diameter of the main body part 52 (first main body part 52A, second main body part 52B) is set to 198 mm and the outer diameter (minimum diameter) of the small diameter portion 53 is set to 181 mm. Furthermore, a material of the shaft-like body 51 is set to carbon steel. A frequency of a high-frequency electric current flowing through the primary coil 11 is set to 1 kHz.

Furthermore, the shaft-like body 51 is continuously subjected to induction heating in the axis C direction by moving the primary coil 11 from the other side D2 (lower side) toward the one side D1 (upper side) of the shaft-like body 51 in the axis C direction while supplying a high-frequency electric current to the primary coil 11. FIG. 10 shows the analysis results of a maximum value of the surface temperature distribution of the shaft-like body 51 when the shaft-like body 51 is subjected to heating required for hardening a certain depth thereof through traverse hardening.

FIG. 11 shows the results of simulation analysis of the surface temperature distribution of the shaft-like body 51 when the shaft-like body 51 is subjected to induction heating using the arc-shaped secondary coils 16A and 16B and the primary coil 11 (that is, using the traverse hardening device 1 in the embodiment). FIG. 11 shows only the analysis results of the right half of the vertical cross-sectional view of the shaft-like body 51. For this reason, only the secondary coil 16A of the secondary coils 16A and 16B is shown.

Also in this simulation, the outer diameter of the main body part 52 (first main body part 52A, second main body part 52B) is set to 198 mm and the outer diameter (minimum diameter) of the small diameter portion 53 is set to 181 mm. Furthermore, the material of the shaft-like body 51 is set to carbon steel. The frequency of the high-frequency electric current flowing through the primary coil 11 is 1 kHz. Furthermore, the shaft-like body 51 is continuously subjected to induction heating in the axis C direction by moving the primary coil 11 from the other side D2 (lower side) toward the one side D1 (upper side) of the shaft-like body 51 in the axis C direction while supplying a high-frequency electric current to the primary coil 11. At this time, a position of the secondary coils 16A is also controlled in accordance with the traverse hardening method described in the embodiment described above. FIG. 11 shows the analysis results of the maximum value of the surface temperature distribution of the shaft-like body 51 when the shaft-like body 51 is subjected to heating required for hardening a certain depth thereof through traverse hardening.

As shown in FIG. 10, it was found that, when the shaft-like body 51 is subjected to induction heating using only the primary coil 11 without utilizing the secondary coils 16A and 16B (in the case of the comparative example), the small diameter portion 53 is heated at 800 °C or higher from the surface to a region having a depth of about 3.5 mm and the maximum value of the surface temperature distribution is 1225 °C.

On the other hand, as shown in FIG. 11, it was found that, when the shaft-like body 51 is subjected to induction heating using the secondary coils 16A and 16B and the primary coil 11 (that is, using the traverse hardening device 1 and the traverse hardening method in the embodiment described above) (in the case of the example of the present invention), the small diameter portion 53 is heated at 800 °C or higher from the surface to a region having a depth of about 4.2 mm and the maximum value of the surface temperature distribution is 1232 °C which is the same as that of the comparative example of FIG. 10.

From the analysis results described above, as compared with the comparative example, according to the example of the present invention, it was confirmed that the entire shaft-like body 51 can be heated at a high temperature of 800 °C or higher in a region deeper from the surface and the shaft-like body 51 can be subjected to necessary and sufficient heating and hardening with a relatively simple constitution.

### [Industrial Applicability]

According to the present invention, when the shaft-like body which includes the main body part and the small diameter portion provided in the intermediate section of the main body part in the axial direction and having the outer diameter smaller than that of the main body part is heated with a relatively simple constitution, it is possible to provide the traverse hardening device in which the secondary coils can be utilized for heating the shaft-like body and the traverse hardening method which can be realized using the traverse hardening device. Therefore, a great industrial applicability is provided.

### [Brief Description of the Reference Symbols]

1 Traverse hardening device
11 Primary coil
16A, 16B Secondary coil
12 Current transformer (current supply device)
19A, 19B First support portion (mechanical element of multiaxial actuator)
23A, 23B First moving portion (mechanical element of multiaxial actuator)
36 Cooling ring
37 Pump (cooling liquid supply device)
39 Support plate (mechanical element of uniaxial actuator)
40 Motor (mechanical element of uniaxial actuator)
42 Rack (mechanical element of uniaxial actuator)
46 Control device
51 Shaft-like body
52 Main body part
53 Small diameter portion

## Claims

1. A traverse hardening device for performing traverse hardening on a shaft-like body which includes a main body part and a small diameter portion provided in an intermediate section of the main body part in an axial direction and having an outer diameter smaller than that of the main body part, comprising:
a primary coil having an inner diameter larger than the outer diameter of the main body part and having a solenoidal shape;
a plurality of secondary coils having an inner diameter larger than the outer diameter of the small diameter portion and having an arc shape;
a uniaxial actuator configured to enable positioning of the primary coil in the axial direction in a state of supporting the primary coil so that the shaft-like body passes inside the primary coil in a radial direction thereof;
a multiaxial actuator configured to individually enable positioning of the secondary coils in a rectangular coordinate system which includes the axial direction and a radial direction of the shaft-like body in a state of individually supporting the secondary coils so that central axes of the secondary coils are parallel to the axial direction; and
a control device which controls the uniaxial actuator and the multiaxial actuator,
wherein the control device controls the uniaxial actuator and the multiaxial actuator at least in a specific section included between both ends of the small diameter portion in the axial direction so that the plurality of secondary coils and the primary coil move toward one side of the primary coil in the axial direction in a state in which the plurality of secondary coils are annularly formed around an axis of the small diameter portion at a position on the one side thereof in the axial direction and a gap in the axial direction between the plurality of secondary coils and the primary coil is kept constant.

2. The traverse hardening device according to claim 1, wherein
the control device controls the multiaxial actuator so that each of the plurality of secondary coils annularly formed retracts to an outside of the main body part in a radial direction thereof when the plurality of secondary coils reach an end of the specific section on the one side, and then
controls the uniaxial actuator and the multiaxial actuator so that the plurality of secondary coils and the primary coil move to a movement stop position set at a position away from the specific section to the one side in the axial direction in a state in which the gap between the plurality of secondary coils and the primary coil in the axial direction is kept constant.

3. The traverse hardening device according to claim 1 or 2, wherein
the control device controls, as an initial setting process, the uniaxial actuator so that the primary coil is made to stand by at a movement start position set at a position away from the specific section to the other side in the axial direction and controls the multiaxial actuator so that the plurality of secondary coils are annularly formed in the specific section and are made to stand by at an end of the specific section on the other side, and then
controls the uniaxial actuator so that the primary coil moves from the movement start position toward the specific section.

4. The traverse hardening device according to any one of claims 1 to 3, further comprising:
a cooling ring having an inner diameter larger than the outer diameter of the main body part and having an inner circumferential surface in which a plurality of nozzles are provided;
a cooling liquid supply device which supplies a cooling liquid to the cooling ring; and
a current supply device which supplies a high-frequency electric current to the primary coil,
wherein the uniaxial actuator is configured to enable positioning of the primary coil in the axial direction in a state of supporting the primary coil and the cooling ring so that the shaft-like body passes inside the primary coil and the cooling ring in the radial direction thereof and the primary coil is disposed on the one side in the axial direction with respect to the cooling ring, and
the control device synchronously controls the uniaxial actuator, the cooling liquid supply device, and the current supply device so that the high-frequency electric current is supplied to the primary coil and the cooling liquid is supplied to the cooling ring during movement of the primary coil and the cooling ring.

5. A traverse hardening method for performing traverse hardening on a shaft-like body which includes a main body part and a small diameter portion provided in an intermediate section of the main body part in an axial direction thereof and having an outer diameter smaller than that of the main body part, comprising:
a first step of preparing a primary coil having an inner diameter larger than an outer diameter of the main body part and having a solenoidal shape and a plurality of secondary coils having an inner diameter larger than the outer diameter of the small diameter portion and having an arc shape; and
a second step of moving the primary coil toward one side in the axial direction so that the shaft-like body passes inside the primary coil in a radial direction thereof while supplying a high-frequency electric current to the primary coil,
wherein the second step includes, at least in a specific section in the axial direction included between both ends of the small diameter portion, annularly forming the plurality of secondary coils around an axis of the small diameter portion at a position on one side in the axial direction with respect to the primary coil and moving the plurality of secondary coils and the primary coil toward the one side in the axial direction in a state in which a gap in the axial direction between the plurality of secondary coils and the primary coil is kept constant.

6. The traverse hardening method according to claim 5, wherein
the second step includes retracting each of the plurality of secondary coils annularly formed to an outside of the main body part in a radial direction thereof when the plurality of secondary coils reach an end of the specific section on the one side, and then
moving the plurality of secondary coils and the primary coil to a movement stop position set at a position away from the specific section to the one side in the axial direction in a state in which the gap between the plurality of secondary coils and the primary coil in the axial direction is kept constant.

7. The traverse hardening method according to claim 5 and 6, wherein
the second step includes, as an initial setting process, making the primary coil stand by at a movement start position set at a position away from the specific section to the other side in the axial direction, annularly forming the plurality of secondary coils in the specific section, and making the plurality of secondary coils stand by at an end of the specific section on the other side, and then
moving the primary coil from the movement start position toward the specific section.

8. The traverse hardening method according to any one of claims 5 to 7, wherein
the first step includes preparing a cooling ring having an inner diameter larger than the outer diameter of the main body part and having an inner circumferential surface in which a plurality of nozzles are provided, in addition to the primary coil and the secondary coils, and
the second step includes moving the primary coil and the cooling ring toward the one side in the axial direction so that the shaft-like body passes inside the primary coil and the cooling ring in the radial direction thereof while supplying the high-frequency electric current to the primary coil and supplying the cooling liquid to the cooling ring in a state in which the primary coil is disposed on the one side in the axial direction with respect to the cooling ring.
